# EUROPEAN PATENT SPECIFICATION

(11) **EP 2 842 705 B1**
(45) Date of publication and mention of the grant of the patent: **10.10.2018**
(21) Application number: 14182368.2
(22) Date of filing: 27.08.2014
(51) Int. Cl.: B27M 1/08, B23Q 7/04, B23Q 3/157

(54) **Method to process wood components or the like**
Verfahren zur Verarbeitung von Holzkomponenten oder Ähnlichem
Procédé pour traiter des composants en bois ou similaires

(30) Priority: 27.08.2013 IT BO20130465
(43) Date of publication of application: 04.03.2015
(73) Proprietor: BIESSE S.p.A., Pesaro (IT)
(72) Inventor: Andreatini, Davide, 61121 Pesaro (IT)
(74) Representative: Manconi, Stefano

(56) References cited:
- EP-A1- 1 810 803
- EP-A2- 2 653 263
- DE-A1- 4 033 036
- US-A- 3 688 362

## Description

The present invention relates to a method to process wood components or the like, according to the preamble of claim 1. Such a method is known from the document EP1810803A1.

It is known in the field of processing wood components, to provide a machine of the type comprising an elongated base provided with two guide members, which are parallel to a substantially horizontal first direction; a plurality of crosspieces mounted between the guide members, which are parallel to a substantially horizontal second direction transverse to the first direction; at least one locking device mounted on each crosspiece to lock at least one component on a substantially horizontal support surface; and an overhead crane, which is mobile along the base in the first direction and extends over the base in the second direction.

The overhead crane supports an operating head, on which there is fitted a first tool suited to perform a chipping machining of the component.

The overhead crane also supports a tool magazine comprising a plurality of tool carrier elements, which are distributed along a path closed in a ring shape, and are mobile along the path and through a tool change station arranged on the path itself.

The above-described known machines to process wood components or the like generally follow two types of methods to replace the first tool.

According to a first method, the first tool is released into an empty tool carrier element arranged in the tool change station; and a second tool is first moved along the mentioned path into the tool change station and is then picked by the operating head.

In this case, the operating head must wait the time required to move the second tool along the mentioned path and into the tool change station.

According to the other of the two above-mentioned known methods, the tools are transferred between the operating head and the tool magazine by means of a tool change device provided with two seats, which are arranged each time, one in the tool change station and the other in a transfer station connected with the operating head itself.

In use, the first tool is released into an empty seat of the tool change device at the transfer station; and a second tool, which is picked by the tool change device in the tool change station, is first moved into the transfer station and is then picked by the operating head.

In this case, the operating head must wait the time required to move the second tool from the tool change station into the transfer station.

However, when the time to process the component is relatively brief and less than the total time required to release the first tool into the tool change station, move a third tool along the mentioned path and into the tool change station, and pick the third tool from the tool change station, the delay time of the operating head becomes greater than the one strictly required to move the third tool from the tool change station into the transfer station.

Furthermore, it follows from the above explanation that the methods followed to replace the tools fitted on the operating head always provide a variable total time for changing the tool as a function of the time required to move the tools along the mentioned path and into the tool change station.

It is an object of the present invention to provide a method to process wood components or the like, which is exempt from the above-described drawbacks and is simple and cost-effective to implement.

According to the present invention, there is provided a method to process wood components or the like, as claimed in claims from 1 to 11.

The present invention also relates to a machine to process wood components or the like.

According to the present invention, there is provided a machine to process wood components or the like, as claimed in claim 12.

The present invention will now be described with reference to the accompanying drawings, which illustrate a non-limiting embodiment thereof, in which:
figure 1 is a perspective diagrammatic view, with parts removed for clarity, of a preferred embodiment of the machine of the present invention;
figure 2 is a diagrammatic plan view, with parts removed for clarity, of the machine in figure 1;
figure 3 is a diagrammatic side view, with parts removed for clarity, of the machine in figure 1; and
figure 4 is a diagrammatic side view, with parts removed for clarity, of a variant of the machine in figure 1.

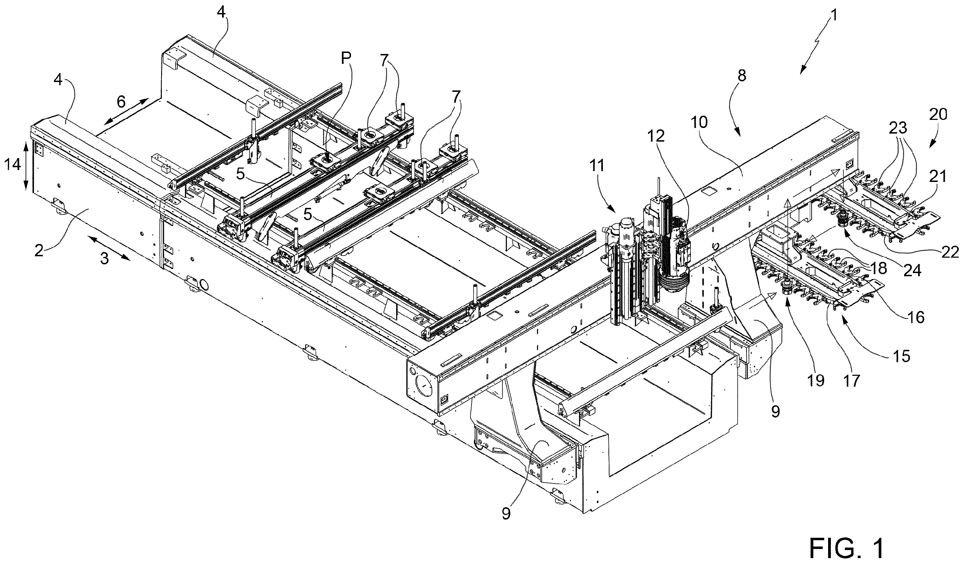

With reference to figures 1, 2 and 3, numeral 1 indicates, as a whole, a machine to process wood components or the like (not shown) such as, for example, panels or window or door casing elements.

Machine 1 comprises an elongated base 2, which extends in a horizontal direction 3, is substantially U-shaped, and has two lateral guide members 4, which are parallel to direction 3 itself.

Base 2 supports a plurality of crosspieces 5, which hereinafter are indicated with the term "work surfaces", and extend between the members 4 in a horizontal direction 6, which is transverse to direction 3, and are slidingly coupled to the members 4 to be moved, manually or by means of respective known operating devices (not shown), along the members 4 themselves in direction 3.

The work surfaces 5 support a plurality of support blocks 7, the arrangement of which on the relative work surfaces 5 substantially depending on the dimensions of the components (not shown) to be processed and on the processing to be performed on the components (not shown) themselves.

Each block 7 is mobile along the relative work surface 5 in direction 6, is coplanar to the other blocks 7 to define a support surface P for at least one component (not shown), and is connected, in the case in point, with a known pneumatic suction device (not shown) suited to lock the component (not shown) on surface P itself.

The blocks 7 are used to process panels, and are replaced with known clamping vices (not shown) to process components for window or door casings.

Base 2 also supports an overhead crane 8 comprising two vertical uprights 9, which are coupled in a known manner to base 2 to perform, along base 2 itself and under the thrust of a known operating device (not shown), straight movements in direction 3, and carry, connected to the free ends thereof, a horizontal crosspiece 10 which extends over base 2 in direction 6.

The overhead crane 8 supports an operating head 11, which is coupled in a known manner to crosspiece 10 to perform, with respect to crosspiece 10 itself, straight movements in direction 6, and is provided with an electro spindle 12.

The electro spindle 12 has a longitudinal axis 13, which is parallel to a vertical direction 14, which is orthogonal to the directions 3 and 6, and is coupled in a known manner to head 11 to perform, with respect to head 11, straight movements in direction 14 itself.

Machine 1 also comprises a first tool store 15 comprising, in turn, an elongated plate 16, which is connected to crosspiece 10 below crosspiece 10 itself, and extends perpendicular to direction 14.

Store 15 also comprises a conveyor chain 17, which is closed in a ring shape around the periphery of plate 16, and is provided with a plurality of tool carrier elements 18, which are fork-shaped, and are distributed uniformly along chain 17 itself.

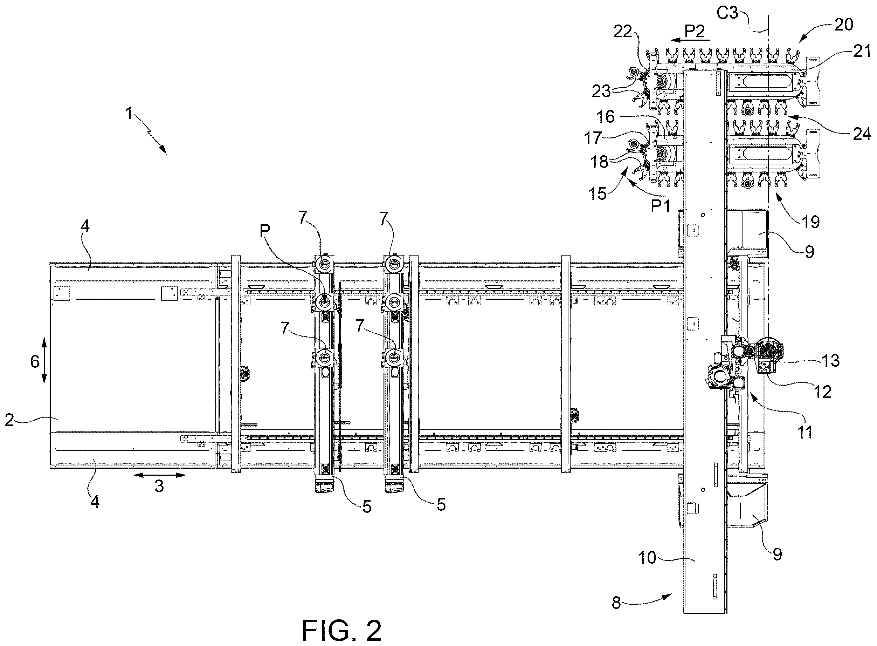

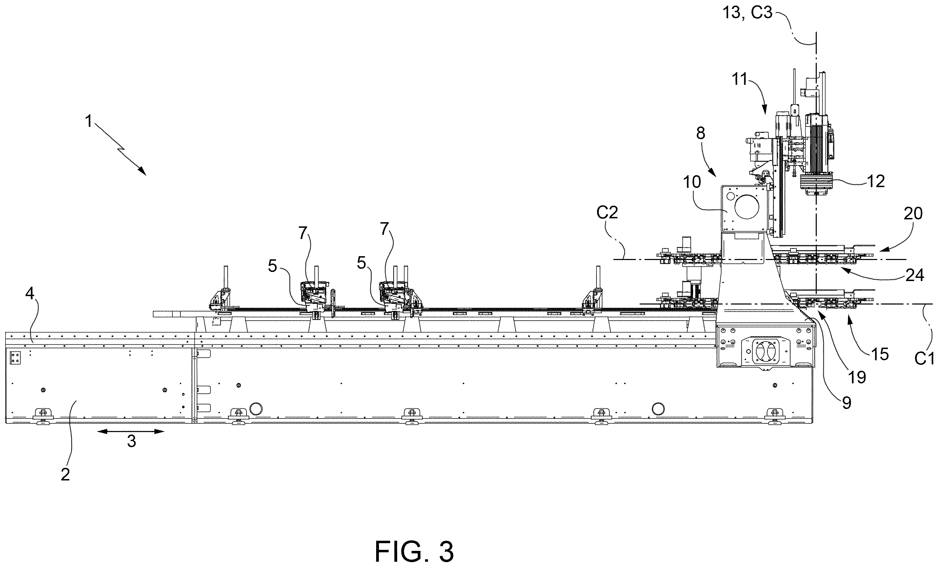

The elements 18 are moved by chain 17 along a ringshaped path P1 (figure 2), which extends in a substantially horizontal containing plane C1 (figure 3), which is perpendicular to direction 14, and also extends through a tool change station 19, which is arranged on path P1 itself.

Each element 18 defines a seat for a relative tool (not shown), which is fitted on element 18 itself by translating transversely to a substantially vertical longitudinal axis thereof, which is parallel to direction 14.

Machine 1 also comprises a second tool store 20 comprising, in turn, an elongated plate 21, which is connected to crosspiece 10 below crosspiece 10 itself, and extends perpendicular to direction 14.

Store 20 also comprises a conveyor chain 22, which is closed in a ring shape around the periphery of plate 21, and is provided with a plurality of tool carrier elements 23, which are fork-shaped, and are distributed uniformly along chain 22 itself.

The elements 23 are moved by chain 22 along a ringshaped path P2 (figure 2), which extends in a substantially horizontal containing plane C2 (figure 3), which is perpendicular to direction 14, and also extends through a tool change station 24, which is arranged on path P2 itself.

Each element 23 defines a seat for a relative tool (not shown), which is fitted on element 23 itself by translating transversely to a substantially vertical longitudinal axis thereof, which is parallel to direction 14.

Concerning the above explanation, it is worth noting that:
the two planes C1 and C2 (figure 3) are parallel to, and distinct from, each other;
the two tool change stations 19, 24 and the longitudinal axis 13 of the electro spindle 12 are arranged in a containing plane C3 (figure 2), which is perpendicular to direction 3; and
the two paths P1 and P2 (figure 2) are staggered from each other in direction 14.

According to a variant not shown, the two paths P1 and P2 at least partly overlap each other in direction 14.

The replacement of the tool (not shown) fitted each time on the electro spindle 12 will now be described starting from an instant in which an empty element 18 is arranged in station 19 and an element 23 with the new tool (not shown) is arranged in station 24.

Once the processing of the component (not shown) locked on surface P is complete, the operating head 11 is first moved in direction 6 to release the tool (not shown) fitted on the electro spindle 12 into the empty element 18, which is arranged in station 19, and is then raised in direction 14, moved in direction 6, and lowered in direction 14 to grip the new tool (not shown), which is arranged in station 24, and is finally moved again in direction 6 to disengage the new tool (not shown) from element 23 considered.

During the subsequent processing of the component (not shown) locked on surface P, the elements 18 of store 15 are moved by chain 17 along path P1 so as to arrange an element 18 with the new tool (not shown) in station 19.

Once the processing of the component (not shown) locked on surface P is complete, the tool (not shown) fitted on the electro spindle 12 is replaced using an operating sequence that is entirely similar to the one described above, and in which the tool (not shown) fitted on the electro spindle 12 is released into station 24 of store 20 and the new tool (not shown) is picked from station 19 of store 15.

In other words, the tool (not shown) fitted on the electro spindle 12 is always released into the tool change station 19, 24 from which it was picked, and each tool change station 19, 24 is used alternatively, once to receive the tool (not shown) fitted on the electro spindle 12, and the next time to release the new tool (not shown) to the electro spindle 12 itself.

Concerning the above explanation, it is worth noting that:
the new tool (not shown) is always moved into the relative tool change station 19, 24 while the component (not shown) locked on surface P is processed;
replacing the tools (not shown) fitted on the electro spindle 12 always provides a constant total tool change time, which corresponds to the sum of the time to release the old tool into one of the stations 19, 24, the time to transfer the electro spindle 12 between the stations 19, 24, and the time to pick the new tool from the other station 19, 24;
replacing the tools (not shown) fitted on the electro spindle 12 exclusively involves moving the electro spindle 12 in the directions 6 and 14.

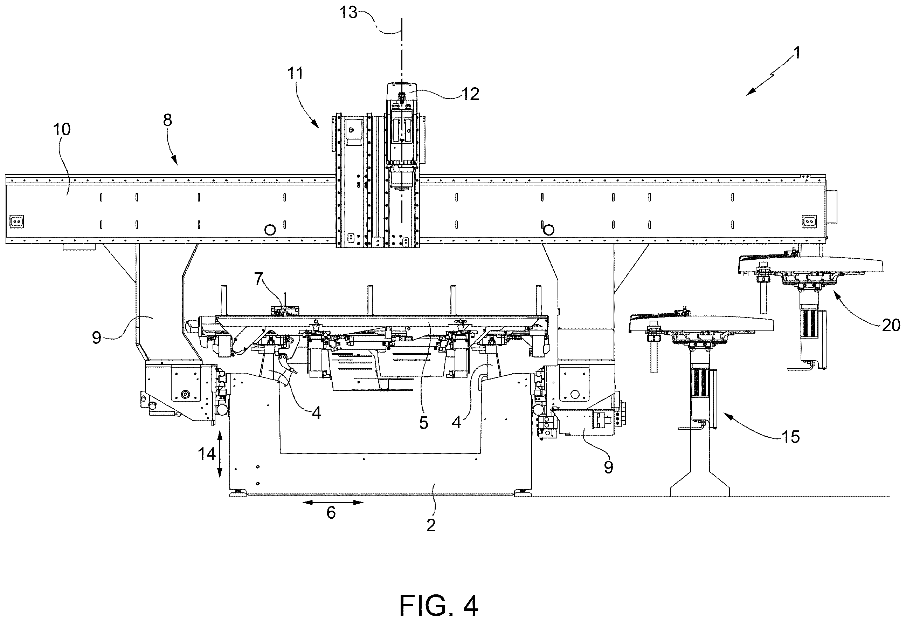

The variant shown in figure 4 differs from what is shown in the preceding figures exclusively in the fact that, in it, store 15 is fixed to the ground and replacing the tools (not shown) fitted on the electro spindle 12 involves initially moving the overhead crane 8 along base 2 in direction 3 so as to align the two stations 19, 24 in plane C3.

According to certain variants not illustrated:
the two stores 15, 20 are mounted on the overhead crane 8 so that the relative paths P1 and P2 are coplanar to each other;
store 15 is fixed to the ground and store 20 is mounted on the overhead crane 8 so that the relative paths P1 and P2 are coplanar to each other;
the two stores 15, 20 are fixed to the ground so that the relative paths P1 and P2 are coplanar to each other; and
the two stores 15, 20 are fixed to the ground so that the relative paths P1 and P2 are arranged in respective containing planes C1, C2, which are parallel to, and distinct from, each other.

When at least one of the stores 15, 20 is fixed to the ground, replacing the tools (not shown) fitted on the electro spindle 12 obviously involves initially moving the overhead crane 8 along base 2 in direction 3 so as to align axis 13 and the two stations 19, 24 in plane C3.

## Claims

1. A method to process wood components or the like in a machine comprising a base (2); a locking device (7) to lock at least one component on a given support surface (P); an overhead crane (8) comprising two vertical uprights (9), which are coupled to the base (2) to perform, with respect to the locking device (7), straight movements along the base (2) in a first direction (3) parallel to the support surface (P), and carry, connected to the free ends thereof, a horizontal crosspiece (10) which extends over the base (2) in a second direction (6), which is transverse to the first direction (3) and parallel to the support surface (P); an operating head (11) to process the components, the operating head (11) being coupled to the horizontal crosspiece (10) to perform, with respect to the horizontal crosspiece (10) and to the locking device (7), straight movements in the second direction (6), and is provided with an electro spindle (12); the method comprising the steps of:
performing a first processing of at least one component by means of a first tool mounted on the operating head (11);
transferring, at the end of the first processing, the first tool from the operating head (11) to a first tool store (15);
transferring a second tool from a second tool store (20), which is different from the first tool store (15), to the operating head (11); and
performing a second processing of at least one component by means of the second tool;
the transfer of the tools between the operating head (11) and the first tool store (15) being performed in correspondence to a first tool change station (19) and the transfer of the tools between the operating head (11) and the second tool store (20) is performed in correspondence to a second tool change station (24); wherein,
said first and second tool change stations (19, 24) are arranged in a lying plane (C3), which is perpendicular to said first direction (3), at least during the transfer of a tool between the operating head (11) and one of said first and second tool stores (15, 20), and **characterized in that** the first and second tool change stations are further arranged next to the base (2) on the same side of the base (2) in the second direction (6); and
the transfer of the operating head (11) between said first and second tool change stations (19, 24) is performed by moving the operating head (11) exclusively in said second direction (6) and further in a third direction (14), which is perpendicular to the support surface (P).

2. A method according to claim 1 and comprising, furthermore, the steps of:
transferring, at the end of the second processing, the second tool from the operating head (11) to the second tool store (20); and
transferring a third tool from the first tool store (15) to the operating head (11).

3. A method according to any of the previous claims, wherein the first tool store (15) comprises a plurality of first tool carrier elements (18), which are distributed along a first path (P1) closed in a ring shape, and are mobile along the first path (P1) and through at least one first tool change station (19), which is arranged in the first path (P1) itself, and the second tool store (20) comprises a plurality of second tool carrier elements (23), which are distributed along a second path (P2) closed in a ring shape, and are mobile along the second path (P2) and through at least one second tool change station (24), which is arranged in the second path (P2) itself.

4. A method according to claim 3, wherein said first and second paths (P1, P2) extend in respective containing planes (C1, C2), which are parallel to one another and distinct from one another.

5. A method according to claim 4, wherein said first and second paths (P1, P2) partially overlap one to the other.

6. A method according to claim 3, wherein said first and second paths (P1, P2) extend in a common containing plane.

7. A method according to any of the previous claims, wherein said first and second tool stores (15, 20) are fixed to the ground or to the base (2).

8. A method according to any of the claims from 1 to 6, wherein said first and second tool stores (15, 20) are fixed to the overhead crane (8).

9. A method according to any of the claims from 1 to 6, wherein said first and second tool stores (15, 20) are fixed one to the overhead crane (8) and the other to the ground or to the base (2).

## Patentansprüche

1. Ein Verfahren zum Bearbeiten von Holzkomponenten oder dergleichen in einer Maschine, die eine Basis (2) umfasst; ferner eine Verriegelungseinrichtung (7) um die wenigstens eine Komponente auf einer vorgegebenen Tragoberfläche (P) zu verriegeln; einen Brückenkran (8) umfassend zwei vertikale Ständer (9), die an die Basis (2) gekoppelt sind, um bezüglich der Verriegelungseinrichtung (7) geradlinige Bewegungen entlang der Basis (2) in einer ersten Richtung (3) parallel zu der Tragoberfläche (P) auszuführen und um einen horizontalen Querbalken (10), der an den freien Enden derselben angeschlossen ist, zu tragen, wobei sich der horizontale Querbalken (10) über der Basis (2) in einer zweite Richtung (6) erstreckt, die quer zu der ersten Richtung (3) und parallel zu der Tragoberfläche (P) verläuft; einen Bearbeitungskopf (11) um die Komponenten zu bearbeiten, wobei der Bearbeitungskopf (11) an dem horizontalen Querbalken (10) angeschlossen ist, um bezüglich des horizontalen Querbalkens (10) und der Verriegelungseinrichtung (7) geradlinige Bewegungen in der zweiten Richtung (6) auszuführen und der mit einer Elektrospindel (12) versehen ist; wobei das Verfahren die folgenden Schritte umfasst:
Ausführen einer ersten Bearbeitung wenigstens einer Komponente mittels eines ersten Werkzeugs, das auf dem Bearbeitungskopf (11) montiert ist;
überführen am Ende der ersten Bearbeitung des ersten Werkzeugs von dem Bearbeitungskopf (11) zu einem ersten Werkzeugspeicher (15);
Überführen eines zweiten Werkzeugs aus einem zweiten Werkzeugspeicher (20), der zusätzlich zu dem ersten Werkzeugspeicher (15) vorgesehen ist, zu dem Bearbeitungskopf (11); und
Ausführen einer zweiten Bearbeitung wenigstens einer Komponente mittels des zweiten Werkzeugs;
wobei das Überführen der Werkzeuge zwischen dem Bearbeitungskopf (11) und dem ersten Werkzeugspeicher (15) im Zusammengang mit einer ersten Werkzeugwechselstation (19) durchgeführt wird und die Überführung der Werkzeuge zwischen dem Bearbeitungskopf (11) und dem zweiten Werkzeugspeicher (20) im Zusammengang mit einer zweiten Werkzeugwechselstation (24) durchgeführt wird;
wobei
die genannten ersten und zweiten Werkzeugwechselstationen (19, 24) in einer liegenden Ebene (C3) angeordnet sind, die senkrecht zu der genannten ersten Richtung (3) ist, wenigstens während des Überführens eines Werkzeugs zwischen dem Bearbeitungskopf (11) und einem der genannten ersten und zweiten Werkzeugspeicher (19, 24), und
**dadurch gekennzeichnet, dass**
die erste und zweite Werkzeugwechselstation ferner neben der Basis (2) auf derselben Seite der Basis (2) in der zweiten Richtung (6) angeordnet sind; und
das Überführen des Bearbeitungskopfes (11) zwischen den genannten ersten und zweiten Werkzeugwechselstationen (19,24) durchgeführt wird durch Bewegen des Bearbeitungskopfes (11) ausschließlich in der genannten zweiten Richtung (6) und ferner in einer dritten Richtung (14), die senkrecht zu der Tragoberfläche (P) ist.

2. Ein Verfahren gemäß Anspruch 1 und ferner umfassend die folgenden Schritte:
Überführen des zweiten Werkzeugs am Ende der zweiten Bearbeitung aus dem Bearbeitungskopf (11) zu dem zweiten Werkzeugspeicher (20); und
Überführen eines dritten Werkzeugs aus dem ersten Werkzeugspeicher (15) zu dem Bearbeitungskopf (11).

3. Ein Verfahren gemäß einem der vorhergehenden Ansprüche, wobei der erste Werkzeugspeicher (15) eine Vielzahl von ersten Werkzeugtragelementen (18) umfasst, die verteilt entlang eines ersten Weges (P1), der in einer Ringform geschlossen ist, sind, und mobil sind entlang des ersten Weges (P1) sind und durch wenigstens eine erste Werkzeugwechselstation (19), die auf dem ersten Weg (P1) angeordnet ist, und der zweiter Werkzeugspeicher (20) eine Vielzahl von zweiten Werkzeugtragelementen (23) umfasst, die verteilt entlang eines zweiten Weges (P2), der in einer Ringform geschlossen ist, sind, und mobil sind entlang des zweiten Weges (P2) und durch wenigstens eine zweite Werkzeugwechselstation (24), die auf dem zweiten Weg (P2) angeordnet ist.

4. Ein Verfahren gemäß Anspruch 3, wobei sich die genannten ersten und zweiten Wege (P1, P2) in jeweiligen einschließenden Ebenen (C1, C2) erstrecken, die parallel zueinander und verschieden zueinander sind.

5. Ein Verfahren gemäß Anspruch 4, wobei die genannten ersten und zweiten Wege (P1, P2) sich gegenseitig teilweise überlappen.

6. Ein Verfahren gemäß Anspruch 3, wobei die genannten ersten und zweiten Wege (P1, P2) sich in einer gemeinsamen einschließenden Ebene erstrecken.

7. Ein Verfahren gemäß einem der vorhergehenden Ansprüche, wobei die genannten ersten und zweiten Werkzeugspeicher (15, 20) am Boden oder an der Basis (2) befestigt sind.

8. Ein Verfahren gemäß einem der Ansprüche 1 bis 6, wobei die genannten ersten und zweiten Werkzeugspeicher (15, 20) an dem Brückenkran (8) befestigt sind.

9. Ein Verfahren gemäß einem der Ansprüche 1 bis 6, wobei einer der genannten ersten und zweiten Werkzeugspeicher (15, 20) an den Brückenkran (8) und der andere an dem Boden oder der Basis (2) befestigt ist.

## Revendications

1. Procédé pour traiter des composants en bois ou similaires dans une machine comprenant une base (2) ; un dispositif de verrouillage (7) pour verrouiller au moins un composant sur une surface de support (P) donnée ; un pont roulant (8) comprenant deux montants verticaux (9) qui sont couplés à la base (2) pour réaliser, par rapport au dispositif de verrouillage (7), des déplacements droits le long de la base (2) dans une première direction (3) parallèle à la surface de support (P), et transporter, raccordée à ses extrémité libres, une traverse horizontale (10) qui s'étend sur la base (2) dans une deuxième direction (6), qui est transversale par rapport à la première direction (3) et parallèle à la surface de support (P) ; une tête de commande (11) pour traiter les composants, la tête de commande (11) étant couplée à la traverse horizontale (10) pour réaliser, par rapport à la traverse horizontale (10) et au dispositif de verrouillage (7), des déplacements droits dans la deuxième direction (6), et est prévue avec une broche électrique (12) ; le procédé comprenant les étapes suivantes :
réaliser un premier traitement d'au moins un composant au moyen d'un premier outil monté sur la tête de commande (11) ;
transférer, à la fin du premier traitement, le premier outil de la tête de commande (11) à un premier magasin d'outils (15) ;
transférer un deuxième outil d'un second magasin d'outils (20), qui est différent du premier magasin d'outils (15), à la tête de commande (11) ; et
réaliser un second traitement d'au moins un composant au moyen du deuxième outil ;
le transfert des outils entre la tête de commande (11) et le premier magasin d'outils (15) étant réalisé en correspondance avec une première station de changement d'outil (19) et le transfert des outils entre la tête de commande (11) et le second magasin d'outils (20) est réalisé en correspondance avec une seconde station de changement d'outil (24) ;
dans lequel :
lesdites première et seconde stations de changement d'outil (19, 24) sont agencées dans un plan horizontal (C3) qui est perpendiculaire à ladite première direction (3), au moins pendant le transfert d'un outil entre la tête de commande (11) et l'un desdits premier et second magasins d'outils (15, 20), et
**caractérisé en ce que** les première et seconde stations de changement d'outil sont en outre agencées à proximité de la base (2) du même côté de la base (2) dans la deuxième direction (6) ; et
le transfert de la tête de commande (11) entre lesdites première et seconde stations de changement d'outil (19, 24) est réalisé en déplaçant la tête de commande (11) exclusivement dans ladite deuxième direction (6) et en outre dans une troisième direction (14), qui est perpendiculaire à la surface de support (P) .

2. Procédé selon la revendication 1 et comprenant en outre les étapes suivantes :
transférer, à la fin du second traitement, le deuxième outil de la tête de commande (11) au second magasin d'outils (20) ; et
transférer un troisième outil du premier magasin d'outils (15) à la tête de commande (11).

3. Procédé selon l'une quelconque des revendications précédentes, dans lequel le premier magasin d'outils (15) comprend une pluralité de premiers éléments de support d'outil (18) qui sont répartis le long d'une première trajectoire (P1) fermée selon une forme annulaire, et sont mobiles le long de la première trajectoire (P1) et à travers au moins une première station de changement d'outil (19), qui est agencée dans la première trajectoire (P1) elle-même, et le second magasin d'outils (20) comprend une pluralité de seconds éléments de support d'outil (23), qui sont répartis le long d'une seconde trajectoire (P2) fermée selon une forme annulaire, et sont mobiles le long de la seconde trajectoire (P2) et à travers au moins une seconde station de changement d'outil (24), qui est agencée dans la seconde trajectoire (P2) elle-même.

4. Procédé selon la revendication 3, dans lequel lesdites première et seconde trajectoires (P1, P2) s'étendent dans des plans de confinement (C1, C2) respectifs, qui sont parallèles entre eux et distincts l'un de l'autre.

5. Procédé selon la revendication 4, dans lequel lesdites première et seconde trajectoires (P1, P2) chevauchent partiellement l'une sur l'autre.

6. Procédé selon la revendication 3, dans lequel lesdites première et seconde trajectoires (P1, P2) s'étendent dans un plan de confinement commun.

7. Procédé selon l'une quelconque des revendications précédentes, dans lequel lesdits premier et second magasins d'outil (15, 20) sont fixés au sol ou sur la base (2).

8. Procédé selon l'une quelconque des revendications 1 à 6, dans lequel lesdits premier et second magasins d'outils (15, 20) sont fixés sur le pont roulant (8).

9. Procédé selon l'une quelconque des revendications 1 à 6, dans lequel lesdits premier et second magasins d'outils (15, 20) sont fixés, l'un sur le pont roulant (8) et l'autre au sol ou sur la base (2).
